# EUROPÄISCHE PATENTSCHRIFT

(11) **EP 0 481 315 B1**
(45) Veröffentlichungstag und Bekanntmachung des Hinweises auf die Patenterteilung: **22.05.1996**
(21) Anmeldenummer: 91117024.9
(22) Anmeldetag: 07.10.1991
(51) Int. Cl.: G01W 1/00, G01W 1/14, G08B 19/02

(54) **Verfahren und Einrichtung zur Schnee- und Eismeldung**
Procedure and device to detect the presence of snow and ice
Procédé et dispositif pour détecter la présence de neige et de glace

(30) Priorität: 15.10.1990 DE 4032734
(43) Veröffentlichungstag der Anmeldung: 22.04.1992
(73) Patentinhaber: TEKMAR ANGEWANDTE ELEKTRONIK GmbH, D-45257 Essen (DE)
(72) Erfinder: Freundlieb, Helmut, W-4300 Essen 18 (DE); Latarius, Hans, W-4300 Essen 16 (DE)
(74) Vertreter: Zenz, Joachim Klaus, Dipl.-Ing.

(56) Entgegenhaltungen:
- EP-A- 0 248 691
- DE-A- 2 514 489
- FR-A- 2 389 952
- US-A- 3 596 264
- US-A- 4 504 157

## Beschreibung

Die Erfindung bezieht sich auf ein Verfahren und eine Einrichtung zur Schnee- und Eismeldung, wie sie aus der DE-A-25 14 489 bekannt sind. Derartige Verfahren haben die Aufgabe, die Gefahr der Bildung von Schnee- oder Eisbelägen auf Fahrbahnen, Bürgersteigen, Treppen, Brücken, Rampen oder Dächern zu melden und anzuzeigen und ggf. durch Ein- und Ausschalten von Heizungsanlagen die Bildung von Schnee- oder Eisbelägen zu verhindern. Die bekannte Schnee- und Eismeldeeinrichtung enthält einen in die zu überwachende Fläche eingeordneten Fühlertopf, ein eine Auswerteschaltung aufweisendes Regelgerät und eine Leitungsverbindung zwischen Fühlertopf und Regelgerät. Der Fühlertopf enthält zwei nach außen freiliegende, auf ein elektrisch leitendes Medium, wie Schmelzwasser, reagierende beheizbare Feuchteelektroden, einen die Elektrodentemperatur erfassenden Temperaturfühler, einen den Temperaturfühler steuernden Thermostaten und einen mit den Elektroden in Reihe geschalteten Spannungsverstärker. Der Thermostat regelt die Temperatur der Feuchteelektroden dadurch auf einen Sollwert, daß er den Heizstromkreis in Abhängigkeit von der Fühlertemperatur ein- und ausschaltet. Die Auswerteschaltung wird in Abhängigkeit von dem Strom im Heizstromkreis gesteuert. Wesentlicher Vorteil des bekannten Eis- und Schneemeldegeräts ist die Einsparung eines gesonderten Umgebungstemperaturfühlers. Der zur Messung der Temperatur der Feuchteelektroden ohnehin erforderliche Temperaturfühler wird zumindest mittelbar auch von der Umgebungstemperatur beeinflußt. Durch die thermostatische Steuerung des Heizstromkreises der beiden in Reihe geschalteten Widerstände wird eine für die meisten Fälle ausreichend zuverlässige und genaue Zweipunktregelung der Temperaturen der Feuchteelektroden erreicht.

Aus der EP-A-0 248 691 ist eine Einrichtung zur Eismeldung mit zwei in einem Metallgehäuse angeordneten Elektroden bekannt, von denen die eine Elektrode kühlbar und/oder beheizbar ist. Je nach Außentemperatur kann durch Kühlung oder Heizung der einen Elektrode der Gefrierpunkt bzw. der Schmelzpunkt einer zu untersuchenden Substanz bestimmt werden, indem das Differenzsignal der an den beiden Elektroden gemessenen Widerstände berechnet und die Veränderung der Steigung des Differenzsignals ausgewertet wird.

Ferner wird in der US-A-3 596 264 eine Einrichtung zur Detektion und Vorhersage von Eis und Schnee auf Oberflächen beschrieben, wobei Meßwerte der Oberflächentemperatur, der Umgebungstemperatur der Luftfeuchtigkeit und des Oberflächenzustandes gemessen und mit gespeicherten Referenzwerten verglichen werden.

Aus der US-A-4 504 157 ist es außerdem für Klimananlagen bekannt, die Umgebungstemperatur aus dem Heizstrom und gerätespezifischen Parametern eines auf einer Solltemperatur gehaltenen Sensors zu bestimmen.

Der Erfindung liegt die Aufgabe zugrunde, eine zuverlässige Schnee- und Eismeldung selbst bei kleinen Temperatur- und Feuchteänderungen mit geringem baulichen und betriebsmäßigen Aufwand zu erreichen. Dies schafft die Voraussetzung dafür, daß trotz optimaler Betriebssicherheit die bei Schnee- und Eismeldungen einzuschaltenden Freiflächenheizungen mit minimalem Energieaufwand betrieben werden können.

Verfahrensmäßig besteht die Lösung der Erfindungsaufgabe in den Merkmalen des Patentanspruchs 1.

Mit Hilfe dieses erfindungsgemäßen Verfahrens gelingt es, den Zustand der zu überwachenden Freifläche genau und bei geringen Totzeiten zu erfassen und demzufolge die Flächenbeheizung und Abtaueinrichtung bedarfsgerecht einzuschalten. Vor allem die Wirtschaftlichkeit wird erhöht, da die Heizzeiten der Flächenheizung und Abtaueinrichtung minimiert werden können.

Eine besonders genaue Regelung der Temperatursollwerte und damit eine optimale Wirtschaftlichkeit ergibt sich in Weiterbildung der Erfindung dadurch, daß die Einstellung der ersten und zweiten Temperatursollwerte in den ersten und zweiten Zeitintervallen durch kontinuierliche oder quasi-kontinuierliche Regelung, insbesondere p-Regelung erfolgt.

Die Feuchteelektroden werden vorzugsweise durch Wechselstrom bei Netzfrequenz beheizt. Die Stellgröße, d.h. der Heizstrom, kann dann durch Variation der Zahl der pro Zeiteinheit durch den Heizstromkreis durchgelassenen Stromschwingungen oder Stromimpulse geändert werden. Ist die Zeiteinheit eine Sekunde, so beträgt die maximal mögliche Anzahl der Stromschwingungen 50 (bei 50 Hz Netzfrequenz).

Im Anschluß an das zweite Zeitintervall kann der Heizstromkreis in einem dritten Zeitintervall unterbrochen werden, während die Auswertung der Fühlertemperatur und der Feuchtemessung unverändert fortgesetzt wird, d.h. bei Erreichen der beiden kritischen Fühlertemperatur- und Feuchtigkeitswerte die Flächenheizung eingeschaltet wird. Diese beiden Bedingungen haben während des gesamten Meßzyklus' Vorrang. Bei Feststellung der Koinzidenz dieser beiden Bedingungen (Temperatur + Feuchtigkeit) wird der Heizstromkreis der Feuchteelektroden unterbrochen und die Flächenheizung über die Mindestzeitdauer eingeschaltet.

Im Interesse einer Minimierung der Betriebskosten insbesondere bei Umgebungstemperaturen nahe 0 °C wird gemäß einer Weiterbildung der Erfindung die Maximaltemperatur der von der Flächenheizung beheizten Fläche begrenzt. Dies kann entweder mit Hilfe eines unbeheizten, gesonderten Fühlers geschehen, der die von der Flächenheizung beheizte Fläche thermisch überwacht und ggf. eine Leistungsbegrenzung oder -herabsetzung der Flächenheizung bewirkt, oder mittels des Thermofühlers selbst, der bei Aktivierung der Flächenheizung, d.h. bei Unterbrechung des Heizstromkreises der Feuchteelektroden, ähnlich einem gesonderten Fühler andere Temperaturmeßaufgaben übernehmen kann.

Bei den gerätespezifischen Parametern handelt es sich bei dem bevorzugten Ausführungsbeispiel der Erfindung um die erwartete minimale Umgebungstemperatur und den dabei benötigten maximalen Heizstrom. Diese Werte werden in der Regel herstellerseitig bestimmt und eingegeben.

Die erfindungsgemäße Schnee- und Eismeldeeinrichtung zeichnet sich durch die Merkmale des Patentanspruchs 10 aus. Kern dieser Einrichtung ist ein Mikroprozessor, der einerseits auf die Sollwerte und gerätespezifischen Parameter zugreifen kann und andererseits während des Meßzyklus' die vom Thermofühler gemessenen Isttemperaturwerte der Feuchteelektroden sowie ein für die Oberflächenfeuchtigkeit charakteristisches Signal erhält und daraus ein Regelsignal an das im Heizkreis der Feuchteelektroden befindliche Stellglied entwickelt. Dieses Stellglied ist vorzugsweise als Zweiwegeschalter oder Triac ausgebildet.

Die freiliegenden Flächen der beiden Feuchteelektroden sowie ggf. einer dritten Feuchteelektrode sind konzentrisch und mit Abstand zueinander in einer Radialebene angeordnet. Ein wesentlicher Aspekt einer bevorzugten Weiterbildung der Erfindung liegt darin, daß den Feuchteelektroden Heizwiderstände lagemäßig so zugeordnet sind, daß die Heizwiderstände selbst bei unterschiedlichen Elektrodenmassen in beiden Feuchteelektroden im wesentlichen gleiche Elektrodentemperaturen hervorrufen. Die erste Feuchteelektrode ist vorzugsweise topfförmig und die zweite Feuchteelektrode ringförmig ausgebildet. Die Masse der topfförmigen Elektrode ist größer als die Masse der ringförmigen Elektrode. Der der ersten Feuchteelektrode zugeordnete Heizwiderstand ist in eine Nut im Topfmantel eingebettet, und der der zweiten ringförmigen Feuchteelektrode zugeordnete Heizwiderstand ist mit gewissem Abstand zu dieser Ringelektrode angeordnet. Der Thermofühler ist in der topfförmigen Feuchteelektrode mit engem wärmeübertragenden Kontakt eingeordnet. Eine etwa verwendete dritte ringförmige Elektrode ist mit Abstand konzentrisch um die ringförmige zweite Elektrode angeordnet.

Alle Elektroden, Heizwiderstände und Thermofühler sind bei einem bevorzugten Ausführungsbeispiel der Erfindung in einem Kunststoffdielektrikum eingebettet, das einen aus Metall oder Kunststoff bestehenden vorgefertigten Fühlertopf im wesentlichen vollständig ausfüllt und an der Öffnungsseite etwas versenkt gegenüber dem Topfrand angeordnet ist, wodurch ein flaches Sammelbecken für Schmelzwasser auf der Fühleroberfläche gebildet ist.

Das Verfahren zur Herstellung dieses Feuchte- und Temperaturfühlers zeichnet sich vorzugsweise dadurch aus, daß zunächst die Heizwiderstände, die Elektroden und eine Anschlußvorrichtung an einer Trägerplatte montiert und letztere in den Fühlertopf eingesetzt wird und daß der Fühlertopf mit thermoplastischem Kunststoff, insbesondere Polyurethan, ausgegossen oder im Spritzgießverfahren verfüllt wird.

Weitere vorteilhafte Ausbildungen und Weiterbildungen der Erfindung sind in den abhängigen Ansprüchen gekennzeichnet.

Im folgenden wird die Erfindung anhand eines in der Zeichnung schematisch dargestellten Ausführungsbeispiels näher erläutert. In der Zeichnung zeigen:
- Fig. 1: eine schematische Schnittansicht eines Fühlerbausteins, der bei der Eis- und Schneemeldeeinrichtung verwendet werden kann;
- Fig. 2: ein schematisches Schaltbild eines Ausführungsbeispiels der erfindungsgemäßen Eis- und Schneemeldeeinrichtung; und
- Fig. 3: eine Kurvenschar zur Erläuterung des Regelverhaltens in einer Stufe des erfindungsgemäßen Verfahrens, in der die Temperatur der Feuchteelektroden zwischen zwei Grenzwerten geregelt wird.

Die erfindungsgemäße Eis- und Schneemeldeeinrichtung weist zwei wesentliche und in der Regel räumlich getrennt angeordnete Komponenten auf, nämlich einen Fühlerbaustein 1 und einen Regelbaustein 2, der einerseits die Temperaturregelung und die Signalgabe an eine in der Zeichnung nur als Block 30 dargestellte Flächenheizung sowie andererseits die Anzeige der Betriebssoll- und -istzustände bewirkt. Fühlerbaustein 1 und Regelbaustein 2 sind über eine mehradrige elektrische Verbindungsleitung 3 miteinander gekoppelt.

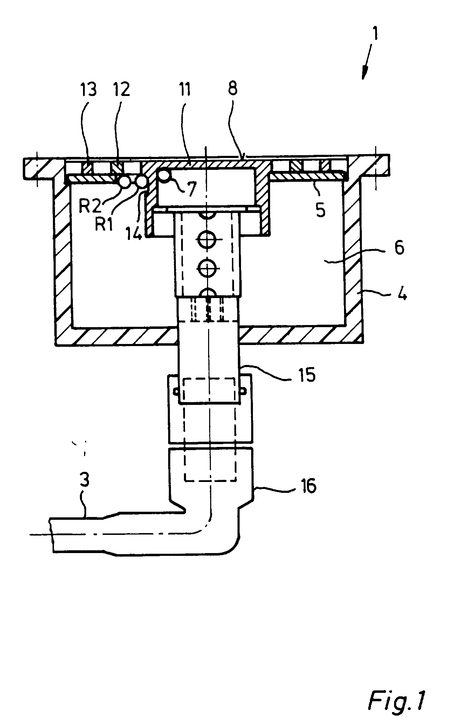

Der Fühlerbaustein 1 ist in einer schematischen Schnittansicht in Fig. 1 dargstellt. Er ist in der Praxis im wesentlichen bündig in die zu überwachende Fläche, beispielsweise eine Fahrbahn, einen Bürgersteig, eine Treppe, eine Brückenfläche, eine Rampe oder eine Dachfläche eingebaut. Der Fühlerbaustein 1 weist ein topfförmiges Gehäuse 4 aus Metall oder Kunststoff auf, in welchem eine Trägerplatte 5 eingebaut ist. Die Trägerplatte 5 ist eine Ringplatte mit relativ großen lochförmigen Öffnungen. Sie trägt in konzentrischer Anordnung eine erste Feuchteelektrode 11 von topfförmiger Ausbildung, eine die Elektrode 11 mit Abstand konzentrisch umgebende zweite Feuchteelektrode 12 und - bei einer speziellen Ausführungsform der Erfindung - eine wiederum mit Abstand konzentrisch angeordnete dritte Elektrode 13. Zwei Heizwiderstände R1 und R2 sind jeweils einer der beiden Feuchteelektroden 11 bzw. 12 zugeordnet. Der erste Heizwiderstand ist in eine Nut 14 in der Mantelfläche der ersten Feuchteelektrode derart angeordnet, daß er (R1) in enger thermischer Kopplung mit der metallischen Elektrode 11 steht. Der Heizwiderstand R2 ist in dem dargestellten Beispiel unter nur geringer Überlappung mit der zweiten Feuchteelektrode 12 im wesentlichen unterhalb des die beiden Elektroden 11 und 12 trennenden Dielektrikums montiert. Die thermische Kopplung zwischen R2 und der Elektrode 12 ist daher weniger eng. Die unterschiedliche thermische Kopplung dient zum Ausgleich des unterschiedlichen Wärmebedarfs, der jeweils zum Aufheizen der stark unterschiedlichen Massen der Elektroden 11 und 12 erforderlich ist. Ein in dem beschriebenen Beispiel als NTC-Widerstand ausgebildeter Thermofühler 7 ist in der topfförmigen Feuchteelektrode 11 mit engem wärmeübertragenden Kontakt angeordnet, so daß er die Temperatur der Feuchteelektrode 11 reaktionsschnell erfassen kann. In bzw. unterhalb der Elektrode 11 sind eine Leiterplatte, ein Abstandshalter und eine Buchsenanordnung 15 angeordnet. In die Buchsenanordnung 15 ist ein geeigneter Stecker 16 zum Anschluß der Verbindungsleitung 3 eingesteckt. Die Trägerplatte 5 mit allen an ihr gehalterten Komponenten einschließlich des im Gehäusetopf 4 befindlichen Teils der Buchsenanordnung 15 sind durch eine Kunststoffmasse 6 im Gehäusetopf 4 eingeschlossen.

Bei der Herstellung des Fühlerbausteins 1 werden die Widerstände R1, R2 und die zusammen mit der Leiterplatte, dem Abstandshalter und der Buchsenanordnung 15 vorgefertigte Feuchteelektrode 11 zunächst auf der Trägerplatte 5 montiert verbunden und in den Innenraum des Gehäusetopfs 4 eingesetzt. Die ebenen Flächen der Elektroden 11, 12 und 13 sind in der Einbaulage gegenüber dem Rand des Gehäusetopfs 4 etwas versenkt (z.B. 0,5 - 1,5 mm). Dadurch entsteht im Einsatz ein flaches Flüssigkeitsreservoir, das die Feuchteelektroden 11, 12 und 13 einschließt. Um alle Komponenten im Innenraum des Gehäusetopfs 4 zu fixieren und ein Eindringen von Feuchtigkeit zu verhindern, wird der gesamte Gehäuseinnenraum mit der Kunststoffmasse 6 verfüllt, vorzugsweise mit einem Polyurethankunststoff vergossen. Dies geschieht durch Löcher, die in der Trägerplatte 5 möglichst gleichmäßig über den Umfang verteilt ausgebildet sind. Nach dem Aushärten der Kunststoffmasse 6 sind alle Einbauteile des Fühlerbausteins 1 fixiert und feuchtigkeitsdicht eingeschlossen. Die freiliegenden Elektrodenoberflächen können auch gegenüber dem Oberflächeniveau der Kunststoffmasse versenkt angeordnet und über Oberflächenkanäle oder -schlitze verbunden sein. Letztere bilden in der Einbaulage Fließwege zwischen benachbarten Elektrodenpaaren (11 und 12 bzw. 12 und 13). Die versenkte Anordnung der Elektroden 11 bis 13 hat in Verbindung mit den engen Schmelzwasser-Fließwegen den Vorteil, daß leitende Festkörper, z.B. Nägel, Klammern usw. nicht ohne weiteres Kurzschlußpfade zwischen den Feuchteelektroden bilden und Fehlmeldungen erzeugen können.

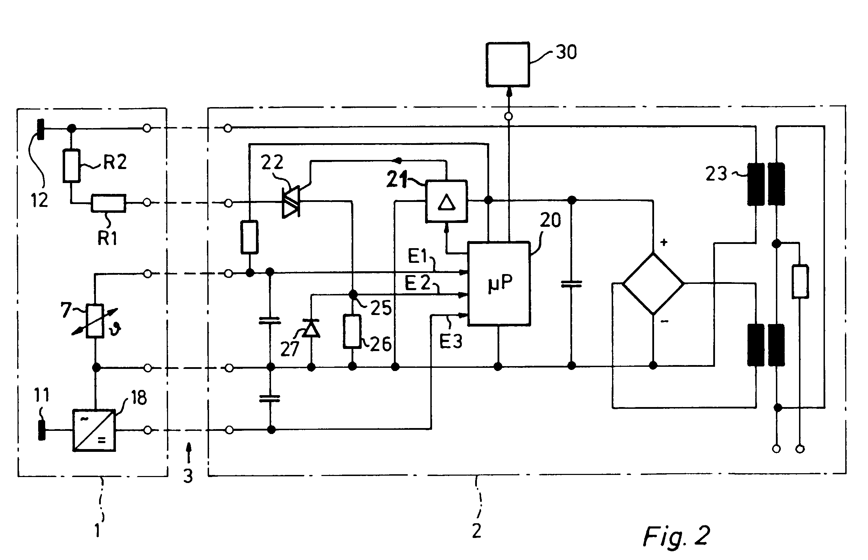

Wie in Fig. 1 zu sehen ist, liegen die Stirnflächen aller Elektroden 11, 12 und 13 zur Außenseite hin frei. Ein beliebig dünner Feuchtigkeitsfilm, der die freiliegende Fläche 8 des Fühlertopfs überzieht, vergrößert sprunghaft den Leitwert zwischen den ersten und zweiten Feuchteelektroden 11 und 12 bzw. 12 und 13. Dies läßt sich in der in Fig. 2 dargestellten Schaltungsanordnung elektronisch erfassen.

Fig. 2 zeigt die Verknüpfung der elektrischen Komponenten des Fühlerbausteins 1 über die Verbindungsleitung 3 mit dem Regelbaustein 2. In Fig. 2 sind von den drei Elektroden der Fig. 1 nur die beiden beheizbaren Feuchteelektroden 11 und 12 gezeigt, die für die Erfindung notwendig sind. Die Einbeziehung der dritten Feuchteelektrode 13 bedingt keine weitere Ader in der Verbindungsleitung 3; stattdessen ist eine einfache Verbindung zur Elektrode 11 vorgesehen, um die Elektrodenfläche und damit die Empfindlichkeit zu erhöhen.

Gemäß Fig. 2 gehören zu den elektrischen Komponenten des Fühlerbausteins die beiden Feuchteelektroden 11 und 12, der als NTC-Widerstand ausgebildete Thermofühler 7, eine Serienschaltung aus den ersten und zweiten Widerständen R1 und R2 und zusätzlich noch ein Gleichrichter 18, der mit der ersten Fühlerelektrode 11 verbunden ist.

Kern des Regelbausteins 2 ist ein Mikroprozessor (µP) 20, der über einen Verstärker 21 einen steuerbaren Zweiwegethyristor (Triac) 22 steuert. Der Triac 22 steuert den im Heizstromkreis R1 und R2 fließenden Wechselstrom i, der von einer Wechselstromquelle 23 geliefert wird. Der Triac läßt sich bei geeigneter Ansteuerung durch den Mikroprozessor 20 so steuern, daß er bei der Netzfrequenz von 50 Hz n = 0 bis 50 Vollwellen des Heizstroms/sec durchläßt. Entsprechend verhält sich auch die quasi-kontinuierliche Steuerung des Stroms in den beiden Heizwiderständen R1 und R2.

Der Mikroprozessor 20 hat drei Signaleingänge E1, E2 und E3. Der erste Eingang E1 ist über die Leitungsverbindung 3 mit dem Thermofühler 7 verbunden. Der zweite Eingang E2 ist mit einem Knotenpunkt 25 verbunden, der den Abgriff für einen Spannungsteiler mit einem im Heizkreis liegenden niederohmigen (z.B. 1-2 Ohm) Widerstand 26 bildet. Parallel zum Spannungsteilerwiderstand 26 liegt eine Freilaufdiode 27, die jeweils eine Halbwelle des über den Triac 22 durchgelassenen Vollwellensignals zum negativen Pol des Versorgungsstromkreises ableitet. E3 ist - im dargestellten Ausführungsbeispiel ebenfalls über die Verbindungsleitung 3 - mit dem Gleichstromausgang des Gleichrichters 18 gekoppelt. Über E3 wird dem Mikroprozessor 20 mitgeteilt, daß ein für Feuchtigkeit charakteristischer Leitwert zwischen den beiden Feuchteelektroden 11 und 12 herrscht, wodurch E3 auf ein positives Potential angehoben wird.

Die übrigen Komponenten des Prinzipschaltbilds gemäß Fig. 2 sind in ihrer Wirkung und gegenseitigen Verknüpfung dem Fachmann bekannt, so daß auf eine genauere Erläuterung hier verzichtet werden kann.

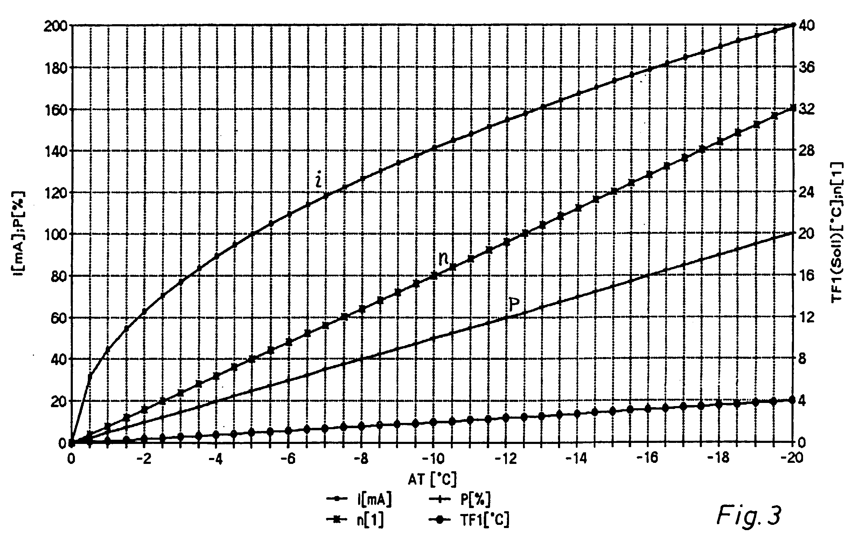

Die Funktionsweise und der Verfahrensablauf zur Schnee- und Eismeldung werden im folgenden unter Bezugnahme auf die Fig. 2 und das Kurvendiagramm gemäß Fig. 3 erläutert:

Die Gefahr einer Eisbildung auf der überwachten Fläche besteht naturgemäß nur dann, wenn die Gefriertemperatur angenähert erreicht oder unterschritten ist. Erst wenn die Umgebungstemperatur die Auslöseschwelle von ca. 0 °C unterschreitet, wird der Heizstromkreis (durch den Triac 22) aktiviert. Der Mikroprozessor 20 hat mindestens einen, in der Regel aber mehrere programmierbare Speicher. In diesem Speicher sind gerätespezifische Parameter in der Regel herstellerseitig eingegeben und stehen bei jedem Meßzyklus zur Verfügung. Zwei dieser Parameter werden in einer ersten Verfahrensstufe benötigt, und zwar die minimale Umgebungstemperatur AT(MIN), z.B. -20 °C und der zugehörige Heizstrom i(MAX) bei AT(MIN).
**1.0 AT-Ermittlung/Berechnung im Zeitintervall I:**
   Fühler-Abmessung, -Material/Volumen/Gewicht = konstant; damit ist auch der statische stündliche Wärmeverlust konstant:
1.1 (TF1-AT)*k*F*1,16 [W] = i*R [W] bzw.:
1.2 AT = -i*(R/(k*F*1,16)) + TF1 [°C] bzw. mit TF1 = 0 :
1.3 AT = -i*(R/(k*F*1,16)) [°C];
   TF1 = Temp. [°C] der Mess-Stelle (Thermofühler 7) innerhalb der Elektrode, wird bei AT < 0 °C mittels
   P-Regelung auf 0 °C gehalten;
   P-Bereich (z.B.): Δ TF1 = 1 °C;
   Stellbereich : n = 0...50 bzw.
   i = 0...u/R(SUM) [A];

   - 1,16 =: Faktor [W*h/kcal]
   - k =: Wärmedurchgangszahl [kcal/(h*°C*m)]
   - F =: Fläche [m]
   - u =: u(rms) [V] des Heiztrafos 23
   - i =: i(rms) [A], gemessen während P-Regelung von TF1 = 0 °C
   - R =: Widerstand [Ohm] des Heizwiderstandes
   - R(SUM) =: Gesamtwid. [Ohm] des Heizkreises
   - AT(MIN)=: minimale Außentemp. [°C] (z.B. -20 °C)
   - i(MAX) =: i bei AT(MIN) [A] (z.B. 0,2 A eines Referenzfühlers)
   - Mit i =: i(MAX) wird:
1.4 AT = AT(MIN) = -(i(MAX)) * (R/(k*F*1,16)) [°C] und mit der Annahme, R = R(Soll) = konstant, ist:
1.5 (R/(k*F*1,16)) = - AT(MIN)/(i(MAX)) [°C/A] = Fühlerkonstante
1.6 AT = i * AT(MIN)/(i(MAX)) [°C].

Toleranzen des Widerstandes der Verbindungsleitung, des als Meßwiderstand dienenden Spannungsteilerwiderstandes 26 und der Netzspannung sind ohne Einfluß.

Das Zeitintervall I wird zweckmäßigerweise voreingestellt, und zwar so, daß die Temperatur des Thermofühlers 7 mit Hilfe der Heizwiderstände R1 und R2 auf den Sollwert TF1(Soll) = 0 °C gebracht werden kann. Messungen aus der Praxis haben gezeigt, daß hierfür eine Zeitspanne von zwei Minuten und weniger ausreicht.

Nach der Ermittlung des Istwerts der Umgebungstemperatur AT kommt es im anschließenden Zeitintervall II darauf an, die Feuchteelektroden 11 und 12 über die ihnen zugeordneten Heizwiderstände R1 und R2 so weit aufgeheizt zu halten, daß ein Feuchtigkeitsfilm an der Oberfläche 8 (Fig. 1) der Feuchteelektroden 11 und 12 selbst bei stark negativen Umgebungstemperaturen (gerade) über dem Gefrierpunkt bleibt. Es ist klar, daß diese Bedingung nur dann erfüllt sein kann, wenn die Feuchteelektroden 11 und 12 über den Temperaturwert von 0 °C aufgeheizt werden, und zwar bei Verwendung der bevorzugten P-Regelung im Bereich eines verfügbaren Regelbereichs zwischen 0 °C und der Solltemperatur TF1(MAX) = 4 °C bei der vorausgesetzten Minimaltemperatur AT(MIN) = -20 °C. (Die Angaben der geräte- und umgebungsspezifischen Parameter von TF1(MAX) = 4 °C und AT(MIN) = -20 °C beziehen sich auf die in Deutschland sinnvollen Einstellungen und können entsprechend den Umgebungsbedingungen geändert werden).

Fig. 3 zeigt ein Diagramm des Zeitintervalls II mit den für die Erfindung wesentlichen Variablen für den hier unterstellten Umgebungstemperaturbereich von 0 bis -20 °C. Wie zu sehen ist, ändert sich die Solltemperatur TF1(Soll) am Thermofühler 7 in dem relevanten Umgebungstemperaturbereich für Zeitintervall II zwischen 0 und -20 °C linear zwischen 0 und + 4 °C. Die Isttemperatur am Thermofühler 7 ist die Regelgröße. Die Stellgröße ist bei dem beschriebenen System die Zahl n der vom Triac 22 durchgelassenen Vollschwingungen. Zwischen TF1 (Regelgröße) und n (Stellgröße) besteht ein proportionaler Zusammenhang (P-Regelung). Entsprechendes gilt auch für die Leistung P, die sich ebenfalls mit der Umgebungstemperatur linear ändert. Der Effektivstrom i geht nur mittelbar in die Regelung ein.

Für das Zeitintervall II gilt die Beziehung
TF1(Soll) = TF1(MAX)*AT/AT(MIN).

Dem Mikroprozessor 20 sind verschiedene Ausgabe- und Eingabeeinrichtungen zugeordnet, von denen nur die zur Abtaueinrichtung (Flächenheizung) gehörige Schaltvorrichtung in Fig. 2 als Block 30 dargestellt ist. Zusätzlich verfügt die neue Eis- und Schneemeldeeinrichtung in bevorzugter Ausführung über wenigstens eine Computerschnittstelle, eine digitale Anzeige der Betriebssoll- und -istzustände sowie über Leuchtdiodenanzeigen, welche die Systemzustände, beispielsweise Über- oder Unterschreitungen von Temperaturschwellen, Feuchte, Alarm, Fühlerheizung, Abtaueinrichtung in Betrieb usw. anzeigen. Ferner gibt es bei dem bevorzugten Ausführungsbeispiel geeignete Einsteller, welche bestimmte Parameter und Sollwerte im Mikroprozessor 20 verändern können. Die einstellbaren Größen sind beispielsweise die Mindestheizzeit in einem Stellbereich von 0 bis 90 min, die Empfindlichkeit der Feuchtemessung, die Temperaturschwellen sowie die Einstellung von Testzyklen. Außerdem kann es einen Wahlschalter geben, mit dessen Hilfe die eingestellten Sollwerte von Mindestzeit, Temperaturschwellen und Feuchte sowie die Istwerte der Temperaturfühler zur Anzeige gebracht werden können.
Im Rahmen des Erfindungsgedankens sind zahlreiche Abwandlungen möglich. So ist es unter Umständen zweckmäßig, die Feuchteelektroden 11, 12 und/oder 13 nicht-konzentrisch, ja sogar abschnittsweise nicht-symmetrisch zueinander anzuordnen. Anstelle der P-Regelung kann unter Umständen eine PID- oder PI-Regelung vorteilhaft sein. Anstelle der Wechselstromquelle 23 kann eine Gleichstromquelle zur Versorgung des Heizstromkreises vorgesehen sein, wobei das Stellglied vorzugsweise eine Variation der Gleichstromimpulslängen in Abhängigkeit von Ausgangssignalen des Mikroprozessors 20 vornimmt. Es können ferner mehrere Fühlertöpfe einer gemeinsamen Auswerteanordnung 2 zugeordnet werden.

## Patentansprüche

1. Verfahren zur Schnee- und Eismeldung unter Verwendung eines Feuchtefühlers mit wenigstens zwei nach außen freiliegenden, auf ein elektrisch leitendes Medium, wie Schmelzwasser reagierenden beheizbaren Feuchteelektroden (11, 12), einem die Elektrodentemperatur erfassenden Thermofühler (7) und einer Auswerteschaltung (2, 20),
wobei der Heizstromkreis der Feuchtelektroden aktiviert wird, wenn am Thermofühler (7) ein bei oder nahe 0 °C gelegener erster Temperatursollwert unterschritten wird;
wobei danach der Thermofühler über ein vorgegebenes erstes Zeitintervall durch Variation des Heizstroms im wesentlichen auf dem ersten Temperatursollwert gehalten und aus dem Iststrom und zuvor ermittelten gerätespezifischen Parametern der Istwert der Umgebungstemperatur bestimmt wird;
wobei danach in einem zweiten vorgegebenen Zeitintervall die Fühlertemperatur in Abhängigkeit von der Umgebungstemperatur auf einen Wert geregelt wird, der zwischen dem ersten Temperatursollwert und einem zweiten, höheren Temperatursollwert liegt und bei dem die Temperatur der Feuchtelektroden über dem Gefrierpunkt liegt; und
wobei von der Auswerteschaltung ein Alarm- und/oder Schaltsignal erzeugt wird, wenn
a) eine für die Eisbildung charakteristische Fühlertemperatur erreicht und
b) ein die Feuchtigkeit kennzeichnender Leitwert zwischen den Feuchtelektroden überschritten wird.

2. Verfahren nach Anspruch 1, dadurch gekennzeichnet, daß die Einhaltung der ersten und zweiten Temperatursollwerte in den ersten und zweiten Zeitintervallen durch kontinuierliche oder quasi-kontinuierliche Regelung erfolgt.

3. Verfahren nach Anspruch 2, dadurch gekennzeichnet, daß die ersten und zweiten Temperatursollwerte p-geregelt werden.

4. Verfahren nach Anspruch 2 oder 3, dadurch gekennzeichnet, daß Wechselstrom bei Netzfrequenz zum Beheizen der Feuchteelektroden verwendet wird und daß die Stellgröße durch Variation der pro Zeiteinheit durch den Heizstromkreis durchgelassenen Stromschwingungen bzw. -impulse geändert wird.

5. Verfahren nach einem der Ansprüche 1 bis 4, dadurch gekennzeichnet, daß im ersten Zeitintervall eine begrenzte Regelabweichung von dem ersten Temperatursollwert zugelassen wird.

6. Verfahren nach einem der Ansprüche 1 bis 5, dadurch gekennzeichnet, daß in einem dritten Zeitintervall der Heizstromkreis unterbrochen wird, während die Auswertung der Fühlertemperatur und der Feuchtemessung fortgesetzt und bei einer für die Eisbildung charakteristischen Fühlertemperatur und einer Überschreitung eines die Feuchtigkeit kennzeichnenden Leitwerts zwischen den Feuchteelektroden ein Alarm- und/oder Schaltsignal erzeugt wird.

7. Verfahren nach einem der Ansprüche 1 bis 6, dadurch gekennzeichnet, daß bei Feststellung einer für die Eisbildung charakteristischen Fühlertemperatur und einer Überschreitung eines die Feuchtigkeit kennzeichnenden Leitwerts zwischen den Feuchteelektroden eine Flächenheizung eingeschaltet wird, welche die Umgebung des Thermofühlers vorzugsweise auf eine voreingestellte Temperatur aufheizt und eine voreinstellbare Mindestzeitdauer eingeschaltet bleibt.

8. Verfahren nach Anspruch 7, dadurch gekennzeichnet, daß der Heizstromkreis der Feuchteelektroden während der Betriebsdauer der Flächenheizung inaktiv gehalten wird.

9. Verfahren nach einem der Ansprüche 1 bis 8, dadurch gekennzeichnet, daß als gerätespezifische Parameter die erwartete minimale Umgebungstemperatur und der dabei benötigte maximale Heizstrom verwendet werden, die herstellerseitig bestimmt und eingegeben werden.

10. Schnee- und Eismeldeeinrichtung mit
einem Feuchtefühler, der zwei nach außen freiliegende, auf ein elektrisch leitendes Medium, wie Schmelzwasser reagierende beheizbare Feuchteelektroden (11, 12) aufweist,
einem die Elektrodentemperatur erfassenden Thermofühler (7), der mit einer (11) der beiden Feuchteelektroden in engem, wärmeübertragenden Kontakt gehalten ist,
einem in den Heizstromkreis der Feuchteelektroden eingebundenen elektrischen Stellglied (22) zur Steuerung des Heizstroms,
einer Auswerteschaltung (2, 20), die bei vorgegebenen Temperatur- und Feuchtigkeitswerten ein Schalt- und/oder Steuersignal auslöst,
einem Computer bzw. Prozessor (20) als Regler für das Stellglied (22);
wobei der Thermofühler mit einem die Regelgröße aufnehmenden ersten Eingang (E1) des Computers gekoppelt ist;
wobei ein zweiter Eingang (E2) des Computers derart mit dem Heizstromkreis (R1, R2, 22, 26) gekoppelt ist, daß eine für den Heizstrom charakteristische elektrische Größe dem zweiten Computereingang (E2) zuführbar ist;
wobei ein dritter Eingang (E3) des Computers mit einem von den Feuchteelektroden (11, 12) abgeleiteten, für Schmelzwasser charakteristischen elektrischen Signal beaufschlagbar ist;
wobei dem Computer ein Speicher zugeordnet ist, in welchem gerätespezifische Parameter (ATₘᵢₙ, iₘₐₓ) und ein Verarbeitungsprogramm zur Berechnung der Umgebungstemperatur (AT) aus dem Iststrom und den gerätespezifischen Parametern sowie zur Regelung der Temperatur (TF1) des Thermofühlers (7) gespeichert sind;
wobei der Computer den Heizstromkreis der Feuchtelektroden aktiviert, wenn am Thermofühler (7) ein bei oder nahe 0 °C gelegener erster Temperatursollwert unterschritten ist,
danach den Thermofühler über ein vorgegebenes erstes Zeitintervall durch Variation des Heizstroms im wesentlichen auf dem ersten Temperatursollwert hält und aus dem Iststrom und zuvor ermittelten gerätespezifischen Parametern den Istwert der Umgebungstemperatur bestimmt und
wobei der Computer danach in einem zweiten vorgegebenen Zeitintervall die Fühlertemperatur in Abhängigkeit von der Umgebungstemperatur auf einen Wert regelt, der zwischen dem ersten Temperatursollwert und einem zweiten, höheren Temperatursollwert liegt und bei dem die Temperatur der Feuchtelektroden über dem Gefrierpunkt liegt.

11. Einrichtung nach Anspruch 10, dadurch gekennzeichnet, daß der Heizstromkreis (R1, R2, 22, 26) an einer Wechselspannungsquelle (23) liegt und einen elektrischen Zweiwegeschalter bzw. Triac (22) als Stellglied enthält und daß der Strom (i) im Heizstromkreis durch Variation der Zahl (n) der pro Zeiteinheit durch den Zweiwegeschalter (22) durchgelassenen Vollwellen bzw. Impulse steuerbar ist.

12. Einrichtung nach Anspruch 10 oder 11, dadurch gekennzeichnet, daß der zweite Prozessoreingang (E2) mit einem in dem Heizstromkreis eingebundenen Spannungsteilerwiderstand (26) verbunden ist.

13. Einrichtung nach Anspruch 12, dadurch gekennzeichnet, daß der Spannungsteiler eine Parallelschaltung aus einer eine Halbwelle ableitenden Diode (27) und einem Ohm'schen Widerstand (26) aufweist.

14. Einrichtung nach einem der Ansprüche 10 bis 13, dadurch gekennzeichnet, daß die freiliegenden Flächen (8) der beiden Feuchteelektroden (11, 12) konzentrisch und mit Abstand zueinander in einer Radialebene angeordnet sind.

15. Einrichtung nach einem der Ansprüche 10 bis 14, dadurch gekennzeichnet, daß den Feuchteelektroden (11, 12) gleiche Heizwiderstände (R1, R2) lagemäßig so zugeordnet sind, daß die Heizwiderstände in beiden Feuchteelektroden gleiche Elektrodentemperaturen hervorrufen.

16. Einrichtung nach Anspruch 15, dadurch gekennzeichnet, daß die erste Feuchteelektrode (11) topfförmig und die zweite Feuchteelektrode (12) ringförmig ausgebildet ist, daß die Masse der ersten Feuchteelektrode größer als die Masse der zweiten Feuchteelektrode ist, daß der der ersten Feuchteelektrode zugeordnete Heizwiderstand (R1) in eine Nut (14) im Topfmantel eingebettet und der der zweiten Feuchteelektrode zugeordnete zweite Heizwiderstand (R2) mit gewissem Abstand zur Ringelektrode (12) angeordnet ist.

17. Einrichtung nach Anspruch 16, dadurch gekennzeichnet, daß der Thermofühler (7) in die topfförmige erste Feuchteelektrode (11) mit engem wärmeübertragenden Kontakt angeordnet ist.

18. Einrichtung nach Anspruch 16 oder 17, dadurch gekennzeichnet, daß eine dritte, unbeheizte ringförmige Elektrode (13) mit Abstand konzentrisch um die ringförmige zweite Elektrode (12) angeordnet ist.

19. Einrichtung nach einem der Ansprüche 16 bis 18, dadurch gekennzeichnet, daß alle Elektroden, Heizwiderstände und Thermofühler in einem Kunststoffdielektrikum ( 6) eingebettet sind, das ein aus Metall oder Kunststoff bestehendes topfförmiges Fühlergehäuse (4) im wesentlichen vollständig ausfüllt und an der Öffnungsseite zur Bildung eines Flüssigkeitsreservoirs etwas vertieft gegenüber dem Gehäuserand abschließt.

20. Einrichtung nach Anspruch 19, dadurch gekennzeichnet, daß die Feuchteelektroden (11..13) in dem Kunststoffdielektrikum (6) versenkt angeordnet sind und Oberflächenkanäle oder -schlitze in dem Dielektrikum (6) als Schmelzwasser-Fließwege zwischen Elektrodenpaaren (11 und 12; 12 und 13) vorgesehen sind.

21. Einrichtung nach Anspruch 19 oder 20, dadurch gekennzeichnet, daß die Elektroden (11..13), Heizwiderstände (R1, R2) und der Thermofühler (7) direkt oder indirekt an einer als Lochscheibe ausgebildeten Trägerplatte vormontiert (5) sind und die Trägerplatte im Fühlergehäuse (4) eingesetzt und fixiert ist.

## Claims

1. Method of detecting snow and ice using a moisture sensor with at least two heatable moisture electrodes (11,12), which are exposed to the exterior and react to an electrically conductive medium, such as melted snow and ice, a temperature sensor (7), which detects the electrode temperature, and an evaluation circuit (2,20), whereby the heating current circuit of the moisture electrodes is activated when the temperature at the temperature sensor (7) falls below a first temperature set point of or near to 0°C;
wherein the temperature sensor is thereafter maintained substantially at said first temperature set point for a predetermined first period of time by varying the heating current and the actual value of the ambient temperature is determined from the actual current and previously determined apparatus-specific parameters;
wherein in a predetermined second period of time the sensor temperature is controlled in dependence on the ambient temperature to a value which lies between the first temperature set point and a second, higher temperature set point and at which the temperature of the moisture electrodes is above freezing point; and
wherein an alarm and/or switching signal is produced by the evaluation circuit when
(a) a sensor temperature characteristic of the formation of ice is reached and
(b) a conductive value indicative of the moisture between the moisture electrodes is exceeded.

2. Method as claimed in claim 1, characterised in that the maintenance of the first and second temperature set points in the first and second periods of time is effected by continuous or quasi-continuous control.

3. Method as claimed in claim 2, characterised in that the first and second temperature set points are p-controlled.

4. Method as claimed in claim 2 or 3, characterised in that alternating current at mains frequency is used for heating the moisture electrodes and that the control variable is altered by varying the current waves or pulses permitted through the heating current circuit per unit time.

5. Method as claimed in one of claims 1 to 4, characterised in that a limited control deviation from the first temperature set point is permitted in the first period of time.

6. Method as claimed in one of claims 1 to 5, characterised in that the heating current circuit is interrupted in a third period of time whilst the evaluation of the sensor temperature and the moisture measurement is continued and an alarm and/or switching signal is produced at a sensor temperature characteristic of the formation of ice and when a conductive value indicative of moisture between the moisture electrodes is exceeded.

7. Method as claimed in one of claims 1 to 6, characterised in that when a sensor temperature characteristic of the formation of ice and the exceeding of a conductive value indicative of moisture between the moisture electrodes are detected, a surface heater is switched on which heats the vicinity of the temperature sensor, preferably to a preset temperature, and remains switched on for a preadjustable minimum period of time.

8. Method as claimed in claim 7, characterised in that the heating current circuit of the moisture electrodes is maintained inactive during the period of operation of the surface heater.

9. Method as claimed in one of claims 1 to 8, characterised in that the expected minimum ambient temperature and the maximum heating current thus required are used as the apparatus-specific parameters which are determined and input by the manufacturer.

10. Snow and ice detecting device including
a moisture sensor which has two heatable moisture electrodes (11,12), which are exposed to the exterior and react to an electrically conductive medium, such as melted snow and ice,
a temperature sensor (7) which detects the electrode temperature and is held in close, heat-transmitting contact with one (11) of the two moisture electrodes,
an electrical control element (22) connected into the heating current circuit of the moisture electrodes to control the heating current,
an evaluation circuit (2,20) which produces a switching and/or control signal at predetermined temperature and moisture values,
a computer or processor (20) as controller for the control element (22);
wherein the temperature sensor is coupled to a first input (E1) of the computer which receives the control variable;
wherein a second input (E2) of the computer is so coupled to the heating current circuit (R1,R2,22,26) that an electrical value characteristic of the heating current may be supplied to the second computer input (E2);
wherein a third input (E3) of the computer may be acted upon by an electrical signal which is derived from the moisture electrodes (11,12) and is characteristic of melted snow and ice;
wherein associated with the computer is a memory in which apparatus-specific parameters (ATₘᵢₙ, iₘₐₓ) and a processing programme for calculating the ambient temperature (AT) from the actual current and the apparatus-specific parameters and for controlling the temperature (TF1) of the temperature sensor (7) are stored;
wherein the computer activates the heating current circuit of the moisture electrodes when the temperature at the temperature sensor (7) falls below a first temperature set point at or near 0°C,
thereafter maintains the temperature sensor substantially at said first temperature set point for a first predetermined period of time by varying the heating current and determines the actual value of the ambient temperature from the actual current and previously determined apparatus-specific parameters and
wherein the computer thereafter controls the sensor temperature in a second predetermined period of time in dependence on the ambient temperature to a value which is between the first temperature set point and a second, higher temperature set point and at which the temperature of the moisture electrodes is above freezing point.

11. Device as claimed in claim 10, characterised in that the heating current circuit (R1,R2,22,26) is connected to an alternating current source (23) and includes an electric two-way switch or Triac (22) as the control element and that the current (i) in the heating current circuit is controllable by varying the number (n) of complete waves or pulses permitted through the two-way switch (22) per unit time.

12. Device as claimed in claim 10 or 11, characterised in that the second processor input (E2) is connected to a voltage dividing resistance (26) connected in the heating current circuit.

13. Device as claimed in claim 12, characterised in that the voltage divider has a parallel circuit comprising a diode (27), which drains a half wave, and an ohmic resistor (26).

14. Device as claimed in one of claims 10 to 13, characterised in that the exposed surfaces (8) of the two moisture electrodes (11,12) are arranged concentrically and spaced apart in a radial plane.

15. Device as claimed in one of claims 10 to 14, characterised in that the same heating resistors (R1,R2) are associated with the moisture electrodes (11,12) in positions such that the heating resistors in the two moisture electrodes cause the same electrode temperatures.

16. Device as claimed in claim 15, characterised in that the first moisture electrode (11) is of cup-shaped construction and the second moisture electrode (12) of annular construction, that the mass of the first moisture electrode is greater than the mass of the second moisture electrode, that the heating resistor (R1) associated with the first moisture electrode is embedded in a groove (4) in the cup wall and the second heating resistor (R2) associated with the second moisture electrode is arranged at a certain spacing from the annular electrode (12).

17. Device as claimed in claim 16, characterised in that the temperature sensor (7) is disposed in the cup-shaped first moisture electrode (11) in close, heat-transmitting contact.

18. Device as claimed in claim 16 or 17, characterised in that a third, unheated annular electrode (13) is arranged spaced from and concentrically with the annular second electrode (12).

19. Device as claimed in one of claims 16 to 18, characterised in that all the electrodes, heating resistors and temperature sensors are embedded in a plastic dielectric (6) which substantially completely fills a cup-shaped sensor housing (4) consisting of metal or plastic and terminates at the opening side somewhat recessed with respect to the housing edge in order to form a liquid reservoir.

20. Device as claimed in claim 19, characterised in that the moisture electrodes (11...13) are arranged recessed in the plastic dielectric (6) and surface channels or slots are provided in the dielectric (6) as flow paths for melted snow and ice between pairs of electrodes (11 and 12; 12 and 13).

21. Device as claimed in claim 19 or 20, characterised in that the electrodes (11...13), heating resistors (R1,R2) and the temperature sensor (7) are preinstalled on a carrier plate constructed as an apertured disc and the carrier plate is inserted in the sensor housing (4) and fixed in position.

## Revendications

1. Procédé de signalisation de neige et de glace au moyen d'un capteur d'humidité comportant au moins deux électrodes d'humidité (11, 12) dégagées vers l'extérieur, réagissant à un milieu conducteur de l'électricité tel qu'eau de fonte et pouvant être chauffées, un thermocapteur (7) captant la température de ces électrodes et un circuit d'exploitation (2, 20), dans lequel
le circuit de chauffage des électrodes d'humidité est mis en action lorsque sur le thermocapteur (7) est franchie vers le bas une première valeur prescrite de température située à ou près de 0°C,
après cela, le thermocapteur est, pendant un premier intervalle de temps fixé à l'avance, maintenu sensiblement à la première valeur prescrite de température par variation du courant de chauffage, et la valeur instantanée de la température ambiante est déterminée à partir du courant instantané et de paramètres spécifiques de l'appareil déterminés auparavant,
après cela, dans un deuxième intervalle de temps fixé à l'avance, la température du capteur est régulée en fonction de la température ambiante à une valeur qui est située entre la première valeur prescrite de température et une deuxième valeur prescrite de température plus élevée et pour laquelle la température des électrodes d'humidité est supérieure au point de congélation, et
le circuit d'exploitation produit un signal d'alarme et/ou de commutation lorsque
a) une température du capteur caractéristique de la formation de glace est atteinte et
b) une conductance entre les électrodes d'humidité, qui indique l'humidité, est dépassée.

2. Procédé selon la revendication 1, caractérisé par le fait que le respect des première et deuxième valeurs prescrites de température dans les premier et deuxième intervalles de temps est assuré par régulation continue ou quasi-continue.

3. Procédé selon la revendication 2, caractérisé par le fait que les première et deuxième valeurs prescrites de température sont régulées par régulation proportionnelle.

4. Procédé selon l'une des revendications 2 et 3, caractérisé par le fait que du courant alternatif de la fréquence du réseau est utilisé pour le chauffage des électrodes d'humidité et que la grandeur réglante est modifiée par variation des oscillations ou impulsions de courant transmises par unité de temps par le circuit de chauffage.

5. Procédé selon l'une des revendications 1 à 4, caractérisé par le fait que dans le premier intervalle de temps est admis un écart de régulation limité de la première valeur prescrite de température.

6. Procédé selon l'une des revendications 1 à 5, caractérisé par le fait que, dans un troisième intervalle de temps, le circuit de chauffage est coupé tandis que l'exploitation de la température du capteur et de la mesure d'humidité est poursuivie et, dans le cas d'une température du capteur caractéristique de la formation de glace et d'un dépassement d'une conductance entre les électrodes d'humidité qui indique l'humidité, un signal d'alarme et/ou de commutation est produit.

7. Procédé selon l'une des revendications 1 à 6, caractérisé par le fait qu'en cas de constatation d'une température du capteur caractéristique de la formation de glace et d'un dépassement d'une conductance entre les électrodes d'humidité qui indique l'humidité est mis en marche un chauffage de surface qui chauffe les alentours du thermocapteur de préférence à une température fixée à l'avance et reste en marche pendant une durée minimale pouvant être fixée à l'avance.

8. Procédé selon la revendication 7, caractérisé par le fait que le circuit de chauffage des électrodes d'humidité est maintenu inactif pendant la durée de marche du chauffage de surface.

9. Procédé selon l'une des revendications 1 à 8, caractérisé par le fait que, comme paramètres spécifiques de l'appareil, sont utilisées la température ambiante minimale prévue et le courant de chauffage maximal nécessaire pour celle-ci, qui sont déterminés et introduits chez le fabricant.

10. Appareil de signalisation de neige et de glace comprenant
un capteur d'humidité qui présente deux électrodes d'humidité (11, 12) dégagées vers l'extérieur, réagissant à un milieu conducteur de l'électricité tel qu'eau de fonte et pouvant être chauffées,
un thermocapteur (7) captant la température des électrodes qui est maintenu en étroit contact transmettant la chaleur avec une (11) des deux électrodes d'humidité,
un élément de réglage électrique (22) incorporé au circuit de chauffage des électrodes d'humidité pour la commande du courant de chauffage,
un circuit d'exploitation (2, 20) qui, pour des valeurs de température et d'humidité fixées à l'avance, déclenche un signal de commutation et/ou de commande,
un ordinateur ou processeur (20) servant de régulateur pour l'élément de réglage (22),
et dans lequel
le thermocapteur est relié à une première entrée (E1) de l'ordinateur, qui reçoit la grandeur réglée,
une deuxième entrée (E2) de l'ordinateur est reliée au circuit de chauffage (R1, R2, 22, 26) de façon telle qu'une grandeur électrique caractéristique du courant de chauffage puisse être envoyée à cette deuxième entrée (E2),
une troisième entrée (E3) de l'ordinateur peut recevoir un signal électrique caractéristique d'eau de fonte tiré des électrodes d'humidité (11, 12),
à l'ordinateur est adjointe une mémoire dans laquelle sont mémorisés des paramètres spécifiques de l'appareil (ATmin, imax) et un programme de traitement pour le calcul de la température ambiante (AT) à partir du courant instantané et des paramètres spécifiques de l'appareil et pour la régulation de la température (TF1) du thermocapteur (7),
l'ordinateur met en action le circuit de chauffage des électrodes d'humidité lorsque sur le thermocapteur (7) est franchie vers le bas une première valeur prescrite de température située à ou près de 0°C,
après cela, maintient le thermocapteur sensiblement à la première valeur prescrite de température pendant un premier intervalle de temps fixé à l'avance, par variation du courant de chauffage, et détermine la valeur instantanée de la température ambiante à partir du courant instantané et de paramètres spécifiques de l'appareil déterminés auparavant et,
après cela, dans un deuxième intervalle de temps fixé à l'avance, régule la température du capteur en fonction de la température ambiante à une valeur qui est située entre la première valeur prescrite de température et une deuxième valeur prescrite de température, plus élevée, et pour laquelle la température des électrodes d'humidité est supérieure au point de congélation.

11. Appareil selon la revendication 10, caractérisé par le fait que le circuit de chauffage (R1, R2, 22, 26) est connecté à une source de tension alternative (23) et contient comme élément de réglage un commutateur bidirectionnel ou triac (22), et que le courant (i) dans le circuit de chauffage peut être commandé par variation du nombre (n) de pleines ondes ou d'impulsions transmises par unité de temps par le commutateur bidirectionnel (22).

12. Appareil selon l'une des revendications 10 et 11, caractérisé par le fait que la deuxième entrée (E2) du processeur est reliée à une résistance de diviseur de tension (26) montée dans le circuit de chauffage.

13. Apppareil selon la revendication 12, caractérisé par le fait que le diviseur de tension présente un montage en parallèle d'une diode (27) éliminant une demi-onde et d'une résistance pure (26).

14. Appareil selon l'une des revendications 10 à 13, caractérisé par le fait que les surfaces dégagées (8) des deux électrodes d'humidité (11, 12) sont placées concentriquement et à distance l'une de l'autre dans un plan radial.

15. Appareil selon l'une des revendications 10 à 14, caractérisé par le fait qu'aux électrodes d'humidité (11, 12) sont adjointes des résistances chauffantes identiques (R1, R2) placées de façon à produire des températures égales dans les deux électrodes d'humidité.

16. Appareil selon la revendication 15, caractérisé par le fait que la première électrode d'humidité (11) est en forme de pot et la deuxième électrode d'humidité (12) est annulaire, que la masse de la première électrode d'humidité est supérieure à celle de la deuxième, et que la résistance chauffante (R1) adjointe à la première électrode d'humidité est logée dans une rainure (14) faite dans la surface latérale extérieure du pot et la deuxième résistance chauffante (R2) adjointe à la deuxième électrode d'humidité est placée à une certaine distance de cette électrode annulaire (12).

17. Appareil selon la revendication 16, caractérisé par le fait que le thermocapteur (7) est placé dans la première électrode d'humidité en forme de pot (11) avec étroit contact transmettant la chaleur.

18. Appareil selon l'une des revendications 16 et 17, caractérisé par le fait qu'une troisième électrode (13), annulaire et non chauffée, est placée concentriquement à distance autour de la deuxième électrode annulaire (12).

19. Appareil selon l'une des revendications 16 à 18, caractérisé par le fait que toutes les électrodes et les résistances chauffantes et le thermocapteur sont noyés dans un diélectrique constitué de plastique (6) qui remplit à peu près complètement un boîtier de capteur en forme de pot (4) en métal ou en plastique et, sur le côté ouvert, se termine un peu en retrait du bord du boîtier pour la formation d'un réservoir de liquide.

20. Appareil selon la revendication 19, caractérisé par le fait que les électrodes d'humidité (11 à 13) sont placées en retrait dans le diélectrique constitué de plastique (6) et des canaux ou fentes superficiels sont prévus dans le diélectrique (6) comme voies d'écoulement d'eau de fonte entre les paires d'électrodes (11 et 12 ; 12 et 13).

21. Appareil selon l'une des revendications 19 et 20, caractérisé par le fait que les électrodes (11 à 13), les résistances chauffantes (R1, R2) et le thermocapteur (7) sont prémontés directement ou indirectement sur une plaque support (5) constituée d'un disque perforé et cette plaque support est placée et fixée dans le boîtier de capteur (4).
